# DEMANDE DE BREVET EUROPEEN

(11) **EP 3 160 173 A1**
(43) Date de publication de la demande: **26.04.2017**
(21) Numéro de dépôt: 15306701.2
(22) Date de dépôt: 23.10.2015
(51) Int. Cl.: H04W 8/20, H04W 8/18, H04W 4/00

(54) **PROCÉDÉ DE PERSONNALISATION D'UN ÉLÉMENT DE SÉCURITÉ COOPÉRANT AVEC UN TERMINAL DE TÉLÉCOMMUNICATION, TERMINAL DE TÉLÉCOMMUNICATION ET ÉLÉMENT DE SÉCURITÉ CORRESPONDANTS**

(71) Demandeur: GEMALTO SA, 92190 Meudon (FR)
(72) Inventeur: BOUTIE, Cédric, 13881 Gemenos Cedex (FR); KUC, Jean-François, 13881 Gemenos Cedex (FR); DUPREZ, Jérôme, 13881 Gemenos Cedex (FR); ARNAUD, Jean-François, 13381 Gemenos Cedex (FR); DAO, Frédéric, 13881 Gemenos Cedex (FR)
(74) Mandataire: Scheer, Luc

(57) **Abrégé**

L'invention concerne notamment un procédé de personnalisation d'un élément de sécurité coopérant avec un terminal de télécommunications, la personnalisation consistant à charger dans l'élément de sécurité un abonnement à un opérateur de téléphonie mobile afin que le terminal puisse communiquer avec le réseau de l'opérateur.

Selon l'invention, le procédé consiste à :
A - Chiffrer les données constituant l'abonnement ;
B - Convertir l'abonnement chiffré en au moins une représentation graphique pouvant être photographiée ou filmée sans aucune connexion à un réseau de télécommunications ;
C - Photographier ou filmer la représentation graphique et la transmettre à l'élément de sécurité ;
D - Déchiffrer la représentation graphique dans l'élément de sécurité afin d'installer l'abonnement dans l'élément de sécurité.

## Description

Le domaine de l'invention est celui des télécommunications. L'invention concerne plus précisément un procédé de personnalisation d'un élément de sécurité coopérant avec un terminal de télécommunication, un terminal de télécommunication et un élément de sécurité correspondants.

On entend par « personnalisation » dans la suite de cette description le chargement d'un abonnement dans un élément de sécurité, tel qu'une carte Sim, une carte UICC, une USIM ou un e-UICC (acronyme anglais signifiant « embedded UICC » pour désigner une UICC soudée dans le terminal de télécommunications et donc non amovible). Le terminal de télécommunications est par exemple un téléphone portable, un smartphone, une tablette ou un module M2M (« Machine to Machine » en anglais).

Le téléchargement d'abonnements dans des éléments de sécurité est connu, par exemple par la demande EP-2649822. Ces téléchargements s'opèrent via OTA (« Over The Air » en anglais).

L'inconvénient d'un chargement d'un abonnement dans un élément de sécurité via OTA nécessite cependant une connexion à un serveur distant (appartenant ou non à un opérateur de téléphonie mobile), c'est-à-dire qu'un abonnement doit déjà présent dans l'élément de sécurité ou alors au moins une application dite « bootstrap » qui permet de se connecter à un serveur distant pour effectuer un téléchargement d'un abonnement complet. Dans le domaine du M2M notamment (ou des e-UICCs sont utilisés), il n'existe pas d'interface homme-machine permettant à l'utilisateur de sélectionner un opérateur de téléphonie mobile plutôt qu'un autre. Il est donc nécessaire de charger en usine, lors d'une phase dite de personnalisation, un abonnement complet d'un opérateur donné dans le module M2M. Ceci pose des problèmes de logistique car les modules M2M doivent alors être personnalisés en fonction des pays dans lesquels ils vont être vendus. L'utilisateur final n'a pas non plus la possibilité de choisir l'opérateur qui va gérer le module M2M, ce qui peut entraîner des problèmes de surcoût, notamment en situation d'itinérance.

De même, le fait de ne pouvoir choisir un abonnement peut générer un problème de connexion car l'utilisateur n'est pas nécessairement bien couvert par le réseau de l'opérateur dont l'abonnement a été pré-chargé dans l'élément de sécurité de son terminal (par exemple pour des applications M2M où les terminaux (modules) sont fixes).

Un autre problème est que lorsqu'un élément de sécurité est pré-provisionné avec un abonnement, son IMSI est stocké dans le réseau de l'opérateur. Ceci représente un coût qui n'est rentabilisé que lorsque l'élément de sécurité sera effectivement vendu et utilisé. Ceci est également valable pour une application « bootstrap ».

Enfin, un fabricant de terminaux embarquant des e-UICCs pré-provisionnés avec des abonnements ne peut récupérer des invendus de terminaux d'un premier opérateur pour les vendre à un deuxième opérateur puisque les abonnements ne correspondent pas à ceux du deuxième opérateur.

La présente invention a notamment pour objectif de remédier à ces inconvénients.

A cet effet, la présente invention propose un procédé de personnalisation d'un élément de sécurité coopérant avec un terminal de télécommunications, la personnalisation consistant à charger dans l'élément de sécurité un abonnement à un opérateur de téléphonie mobile afin que le terminal puisse communiquer avec le réseau de l'opérateur, le procédé consistant à :
A - Chiffrer les données constituant l'abonnement ;
B - Convertir l'abonnement chiffré en au moins une représentation graphique pouvant être photographiée ou filmée sans aucune connexion à un réseau de télécommunications ;
C - Photographier ou filmer la représentation graphique et la transmettre à l'élément de sécurité ;
D - Déchiffrer la représentation graphique dans l'élément de sécurité afin d'installer l'abonnement dans l'élément de sécurité.

Avantageusement, la représentation graphique est constituée par au moins un code QR.

Préférentiellement, la représentation graphique est imprimée sur un support papier.

Alternativement, la représentation graphique est affichée sur un écran.

La représentation graphique peut être constituée par des codes QR s'affichant successivement sur un écran.

Avantageusement, les codes QR sont des codes HCC2D.

Préférentiellement, la clé servant au déchiffrement de la représentation graphique est l'el D de l'élément de sécurité.

L'élément de sécurité est préférentiellement un e-UICC.

L'étape -A- est avantageusement précédée par une étape consistant à :
- Chiffrer les données constituant un système d'exploitation destiné à l'élément de sécurité ;
- Convertir le système d'exploitation en au moins une représentation graphique pouvant être photographiée ou filmée sans aucune connexion à un réseau de télécommunications ;
- Photographier ou filmer la représentation graphique et la transmettre à l'élément de sécurité ;
- Déchiffrer la représentation graphique dans l'élément de sécurité afin d'installer le système d'exploitation dans l'élément de sécurité.

L'étape -A- est préférentiellement mise en oeuvre dans un point de vente du terminal de télécommunications.

Dans un mode de mise en oeuvre avantageux, la photographie ou le filmage de la représentation graphique est effectuée par le terminal.

L'invention concerne également un terminal de télécommunications coopérant avec un élément de sécurité, le terminal étant apte à charger dans l'élément de sécurité un abonnement à un opérateur de téléphonie mobile afin que le terminal puisse communiquer avec le réseau de l'opérateur, ce terminal comprenant :
- des moyens de saisie optique pour photographier ou filmer une représentation graphique de données constituant l'abonnement chiffré de manière à pouvoir les transmettre à l'élément de sécurité ;
- des moyens pour déchiffrer la représentation graphique dans l'élément de sécurité afin d'installer l'abonnement dans l'élément de sécurité.

Enfin, l'invention concerne un élément de sécurité destiné à coopérer avec un terminal de télécommunications d'un utilisateur, l'élément de sécurité comprenant des moyens pour charger un abonnement à un opérateur de téléphonie mobile afin que le terminal puisse communiquer avec le réseau de l'opérateur, cet élément de sécurité comprenant des moyens pour déchiffrer une représentation graphique pouvant être photographiée ou filmée, la représentation graphique résultant d'une conversion graphique des données constituant l'abonnement, l'abonnement ayant été chiffré, afin d'installer l'abonnement dans l'élément de sécurité.

L'invention sera mieux comprise à la lecture de la description suivante d'un mode de mise en oeuvre de l'invention, donné à titre explicatif et non limitatif.

L'invention s'applique principalement aux modules M2M comprenant des e-UICCs mais également aux UICCs amovibles (cartes par exemple) coopérant avec des terminaux.

De même que dans l'état de la technique, les abonnements sont générés par un SM-DP (« Subscription Manager Data Preparation » en anglais) ou par un opérateur de radiotéléphonie mobile.

L'élément de sécurité, lorsqu'il s'agit d'une e-UICC est fabriqué par un EUM (« e-UICC Manufacturer » en anglais) ou par un fabricant d'UICC.

La différence fondamentale par rapport à l'état de la technique est que selon l'invention l'élément de sécurité ne comprend aucun abonnement lui permettant de communiquer avec un réseau d'opérateur : l'abonnement est constitué de données (le terme données est à prendre au sens large, il s'agit de clés, d'applications, d'un IMSI, d'algorithmes tel que l'algorithme Milenage par exemple, tout ce qui permet à l'élément de sécurité d'être opérationnel comme s'il avait été personnalisé avec les données d'un opérateur). Ces données (scripts) sont par exemple sous forme binaire ou hexadécimale et subissent dans une première étape selon le procédé de l'invention un chiffrement (afin qu'un seul élément de sécurité puisse par la suite être personnalisé à l'aide de cet abonnement).

L'invention propose ensuite, dans une seconde étape, de convertir l'abonnement chiffré en au moins une représentation graphique pouvant être photographiée ou filmée (à l'aide d'une caméra) sans aucune connexion à un réseau de télécommunications.

Cette représentation graphique est par exemple un code QR ou plusieurs codes QR constituant l'abonnement chiffré. Ce ou ces codes QR peuvent par exemple être imprimés sur un support papier. Il est également possible de convertir l'abonnement chiffré en une image, par exemple protégée par stéganographie à l'aide du chiffrement précité. L'utilisation de codes barre est également possible mais ceux-ci ne permettent pas de transmettre une quantité d'informations importante.

Une autre solution consiste à afficher les codes QR ou l'image sur un écran : on peut imaginer une borne de personnalisation, par exemple dans un aéroport ou chez un vendeur de terminaux. Après avoir acheté le terminal, l'utilisateur achète un abonnement auprès d'un opérateur de son choix et le ou les codes QR (ou l'image) s'affichent sur un écran. Si la taille de l'abonnement est importante (et notamment si des applications de tailles importantes sont également à charger dans l'élément de sécurité), plusieurs codes QR seront nécessaires. Il est également possible d'afficher un QR code dynamique (animé) constitué par des codes QR s'affichant successivement au même emplacement sur l'écran. Le document WO 2014/045105 décrit une telle solution où plusieurs codes QR s'affichent successivement sur un écran et un appareil filme la succession de codes. Des QR codes de type HCC2D (High Capacity Colored Two Dimensional Codes) sont un exemple préférentiel de codes QR pouvant être utilisés.

La troisième étape selon l'invention consiste en ce que l'utilisateur photographie ou filme la représentation graphique à l'aide de la caméra de son terminal et celle-ci est transmise à l'élément de sécurité avec lequel il coopère. Lorsque plusieurs codes QR sont affichés ou imprimés, l'utilisateur photographie successivement les codes QR dans un ordre qui lui est indiqué. Il est également possible de filmer la représentation graphique à l'aide d'un autre appareil (par exemple une tablette) et la transmettre, par exemple par une liaison Bluetooth, NFC ou IrDA au terminal de l'utilisateur qui la retransmet à l'élément de sécurité. Une liaison filaire est également envisageable. Le terminal comprend pour cela une application lui permettant de lire le ou les codes QR et de les transmettre à l'élément de sécurité.

L'élément de sécurité, lors d'une quatrième étape selon l'invention, déchiffre la représentation graphique afin d'y installer l'abonnement. L'abonnement a ainsi été installé dans l'élément de sécurité.

Le terminal selon l'invention est donc, avant sa personnalisation selon le procédé de l'invention, sans connectivité (« vanilla device » en anglais). Il est ainsi possible pour un fabricant de terminaux embarquant des e-UICCs non pré-provisionnés avec des abonnements de récupérer des invendus de terminaux d'un premier opérateur pour les vendre à un deuxième opérateur. Ceci est particulièrement intéressant dans le cas d'applications M2M.

Les représentations graphiques sont toutes chiffrées par une clé afin qu'un seul élément de sécurité puisse charger un abonnement.

Dans un mode de mise en oeuvre, un schéma de clés privées est utilisé : l'abonnement est chiffré à l'aide d'une clé comprise dans l'élément de sécurité. Cette clé est par exemple l'eID de l'élément de sécurité (dans le cas d'une e-UICC) ou l'ICCID de cet élément de sécurité (dans le cas d'une UICC). On pourra se référer à la spécification technique de la GSMA intitulée « Remote Provisioning Architecture for Embedded UICC », version 1.0 du 17 décembre 2013. L'eID ou l'ICCID peuvent être lus dans l'élément de sécurité ou imprimés sur un document, par exemple sur l'emballage du terminal de télécommunications.

Dans un autre mode de mise en oeuvre, l'élément de sécurité possède un certificat (donc une clé privée) et une clé publique. Le serveur chargé de générer l'abonnement a un certificat clé publique / clé privée et la clé publique de l'élément de sécurité. L'élément de sécurité a quant à lui la clé publique du serveur et lorsque le serveur encrypte un abonnement pour un élément de sécurité, il utilise sa clé privée et la clé publique de la carte.

Il est également possible d'utiliser une procédure d'établissement de clés (« key establishment procedure » en anglais) pour avoir des clés partagées.

Un cas typique de mise en oeuvre de la présente invention est le suivant : un point de vente d'un opérateur de téléphonie mobile achète un terminal auprès d'un fabricant, le terminal comprenant un e-UICC. Un QR code est imprimé par le fabricant sur l'emballage du terminal ou il y colle un tag comprenant l'eID de l'élément de sécurité. Comme déjà indiqué, l'élément de sécurité ne comprend aucun abonnement (« vanilla device »). Le terminal est envoyé au point de vente de l'opérateur. L'agent de l'opérateur ou l'utilisateur scanne le QR code pour récupérer l'eID ou entre manuellement l'eID imprimé dans un appareil capable de chiffrer un abonnement à l'aide de cet eID. L'appareil génère le ou les QR codes que l'agent de l'opérateur ou l'utilisateur filme ou photographie pour que les scripts d'abonnement soient transmis à l'élément de sécurité et y soient déchiffrés.

Un autre cas d'utilisation est le transfert du MSISDN et le chargement d'un abonnement dans un nouveau terminal (un utilisateur veut conserver son numéro de téléphone et changer de terminal) :
- L'utilisateur se connecte au portail Internet de l'opérateur à l'aide de son ancien terminal et demande la génération d'un nouvel abonnement. Il transfère également son MSISDN au portail Internet. L'ancien terminal affiche les codes QR et le nouveau terminal les photographie ou les filme.
- Une autre solution est que l'utilisateur utilise le portail Internet de l'opérateur pour générer les QR codes et les utiliser avec son nouveau terminal.

Si l'élément de sécurité ne comprend pas de système d'exploitation, il est également possible de charger un système d'exploitation dans l'élément de sécurité de la même manière que le chargement d'un abonnement. Cette opération doit en principe être effectuée avant le chargement de l'abonnement et consiste à :
- Chiffrer, les données constituant un système d'exploitation destiné à l'élément de sécurité ;
- Convertir le système d'exploitation en au moins une représentation graphique pouvant être photographiée ou filmée sans aucune connexion à un réseau de télécommunications ;
- Photographier ou filmer la représentation graphique et la transmettre à l'élément de sécurité ;
- Déchiffrer la représentation graphique dans l'élément de sécurité afin d'installer le système d'exploitation dans l'élément de sécurité.

Le système d'exploitation ne dépend pas de l'opérateur de téléphonie mais de l'élément de sécurité. Ceci permet notamment de charger dans l'élément de sécurité la dernière version du système d'exploitation.

Si la quantité de données à charger dans l'élément de sécurité est importante pour obtenir un abonnement complet, il est également possible de ne télécharger qu'une application « bootstrap » permettant de connecter le terminal au réseau d'un opérateur pour en télécharger via OTA un abonnement complet. Dans ce cas, seules une IMSI et une clé Ki peuvent être chargés dans l'élément de sécurité.

L'invention concerne également un terminal de télécommunications coopérant avec un élément de sécurité, le terminal étant apte à charger dans l'élément de sécurité un abonnement à un opérateur de téléphonie mobile afin que le terminal puisse communiquer avec le réseau de cet opérateur, le terminal comprenant :
- des moyens de saisie optique pour photographier ou filmer une représentation graphique de données constituant l'abonnement chiffré de manière à pouvoir les transmettre à l'élément de sécurité ;
- des moyens pour déchiffrer la représentation graphique dans l'élément de sécurité afin d'installer l'abonnement dans l'élément de sécurité.

Enfin, l'invention concerne un élément de sécurité destiné à coopérer avec un terminal de télécommunications d'un utilisateur, l'élément de sécurité comprenant des moyens pour charger un abonnement à un opérateur de téléphonie mobile afin que le terminal puisse communiquer avec le réseau de l'opérateur, cet élément de sécurité comprenant des moyens pour déchiffrer une représentation graphique pouvant être photographiée ou filmée, la représentation graphique résultant d'une conversion graphique des données constituant l'abonnement, l'abonnement ayant été chiffré, afin d'installer l'abonnement dans l'élément de sécurité.

## Revendications

1. Procédé de personnalisation d'un élément de sécurité coopérant avec un terminal de télécommunications, ladite personnalisation consistant à charger dans ledit élément de sécurité un abonnement à un opérateur de téléphonie mobile afin que ledit terminal puisse communiquer avec le réseau dudit opérateur, **caractérisé en ce qu'**il consiste à :
A - Chiffrer les données constituant ledit abonnement ;
B - Convertir ledit abonnement chiffré en au moins une représentation graphique pouvant être photographiée ou filmée sans aucune connexion à un réseau de télécommunications ;
C - Photographier ou filmer ladite au moins une représentation graphique et la transmettre audit élément de sécurité ;
D - Déchiffrer ladite représentation graphique dans ledit élément de sécurité afin d'installer ledit abonnement dans ledit élément de sécurité.

2. Procédé selon la revendication 1, **caractérisé en ce que** ladite représentation graphique est constituée par au moins un code QR.

3. Procédé selon l'une des revendications 1 et 2, **caractérisé en ce que** ladite représentation graphique est imprimée sur un support papier.

4. Procédé selon l'une des revendications 1 et 2, **caractérisé en ce que** ladite représentation graphique est affichée sur un écran.

5. Procédé selon la revendication 1, **caractérisé en ce que** ladite représentation graphique est constituée par des codes QR s'affichant successivement sur un écran.

6. Procédé selon l'une des revendications 2 à 5, **caractérisé en ce que** lesdits codes QR sont des codes HCC2D.

7. Procédé selon l'une des revendications 1 à 6, **caractérisé en ce que** la clé servant au déchiffrement de ladite représentation graphique est l'eID dudit élément de sécurité.

8. Procédé selon l'une des revendications 1 à 7, **caractérisé en ce que** ledit élément de sécurité est un e-UICC.

9. Procédé selon l'une des revendications 1 à 8, **caractérisé en ce que** l'étape -A- est précédée par une étape consistant à :
- Chiffrer les données constituant un système d'exploitation destiné audit élément de sécurité ;
- Convertir ledit système d'exploitation en au moins une représentation graphique pouvant être photographiée ou filmée sans aucune connexion à un réseau de télécommunications ;
- Photographier ou filmer ladite au moins une représentation graphique et la transmettre audit élément de sécurité ;
- Déchiffrer ladite représentation graphique dans ledit élément de sécurité afin d'installer ledit système d'exploitation dans ledit élément de sécurité.

10. Procédé selon l'une des revendications 1 à 9, **caractérisé en ce que** l'étape -A- est mise en oeuvre dans un point de vente dudit terminal de télécommunications.

11. Procédé selon l'une des revendications 1 à 10, **caractérisé en ce que** ladite photographie ou ledit filmage de ladite représentation graphique est effectuée par ledit terminal.

12. Terminal de télécommunications coopérant avec un élément de sécurité, ledit terminal étant apte à charger dans ledit élément de sécurité un abonnement à un opérateur de téléphonie mobile afin que ledit terminal puisse communiquer avec le réseau dudit opérateur, **caractérisé en ce qu'**il comprend :
- des moyens de saisie optique pour photographier ou filmer une représentation graphique de données constituant ledit abonnement chiffré de manière à pouvoir les transmettre audit élément de sécurité ;
- des moyens pour déchiffrer ladite représentation graphique dans ledit élément de sécurité afin d'installer ledit abonnement dans ledit élément de sécurité.

13. Elément de sécurité destiné à coopérer avec un terminal de télécommunications d'un utilisateur, ledit élément de sécurité comprenant des moyens pour charger un abonnement à un opérateur de téléphonie mobile afin que ledit terminal puisse communiquer avec le réseau dudit opérateur, **caractérisé en ce qu'**il comprend des moyens pour déchiffrer une représentation graphique pouvant être photographiée ou filmée, ladite représentation graphique résultant d'une conversion graphique des données constituant ledit abonnement, ledit abonnement ayant été chiffré, afin d'installer ledit abonnement dans ledit élément de sécurité.
